# EUROPEAN PATENT SPECIFICATION

(11) **EP 2 960 607 B1**
(45) Date of publication and mention of the grant of the patent: **13.02.2019**
(21) Application number: 13875423.9
(22) Date of filing: 21.06.2013
(51) Int. Cl.: F27B 3/18, F27D 3/00, C21C 5/52

(54) **ARC FURNACE AUTOMATIC FEEDING DEVICE**
AUTOMATISCHE ZUFUHRVORRICHTUNG FÜR EINEN LICHTBOGENOFEN
DISPOSITIF D'ALIMENTATION AUTOMATIQUE DE FOUR À ARC

(30) Priority: 22.02.2013 CN 201320082102 U; 22.02.2013 CN 201310056573; 27.03.2013 CN 201310101756; 16.04.2013 CN 201310131182
(43) Date of publication of application: 30.12.2015
(73) Proprietor: CISDI Engineering Co., Ltd, Chongqing 400013 (CN)
(72) Inventor: HUANG, Qiming, Chongqing 400013 (CN); YANG, Ningchuan, Chongqing 400013 (CN); LIU, Chunting, Chongqing 400013 (CN); SONG, Chaosheng, Chongqing 400013 (CN); XU, Jie, Chongqing 400013 (CN)
(74) Representative: Ström & Gulliksson AB
(86) International application number: PCT/CN2013/077701
(87) International publication number: WO 2014/127597

(56) References cited:
- CN-A- 102 181 601
- CN-A- 102 721 274
- CN-A- 103 075 881
- CN-A- 103 146 876
- CN-U- 201 672 810
- KR-A- 20110 109 138
- US-B2- 6 450 804

## Description

### Technical Field

The present invention relates to steel-making equipment, and in particularly relates to an automatic feeding apparatus for an electric arc furnace.

### Background

The scrap steel feeding is a key technical process affecting production efficiency during the steel-making production in an electrical furnace. In order to achieve the automatic production of the electric arc furnace and the continuity of the production, it is often required to perform a small amount of, continuous and long-time feeding; and the typical equipment which is able to achieve a small amount of, continuous and long-time feeding for the electric arc furnace is a CONSTEEL system. Conventional feeding by a material basket, a material tank and a material hopper is a common technique of non-continuity and manual operations. Such feeding techniques instantaneously stack scarp steel into a pile during operation; due to the stacking and mutual tangling of the scrap steel, it is very difficult to evenly re-distribute the scrap steel on the material conveying device to form a material strip with a thin and uniform thickness, and the stacked steel materials are easily accumulated at a throat portion connecting the material conveying device and the electrical arc furnace, and leads to blocking, which can cause a serious influence to the continuous production of the electric arc furnace. The CONSTEEL system distributes the materials onto a horizontal conveyor belt that is a few tens of meters long by a disk crane, so as to form a uniform material conveyor belt, the material distributing process requires a large amount of manual judgements and operations, the equipment covers a long area, the plant has a large area, and the old electric furnace layout is difficult to modify.

Energy saving, consumption reduction and being environmentally friendly in electrical furnace steel-making are always core techniques in the development of global electrical furnace steel-making technology, and the typical representations of energy saving techniques are such as a finger shaft furnace (DE4025249A1-1992), side push shaft feeding (US2007/0013112A1), vibration and continuous feeding CONSTEEL (US5400358-1992 and CN201672810U) techniques. The preheating for the shaft feeding therein has a better preheating energy saving effect due to the smoke penetrating the scrap steel layer, and can reach 60-100 kw.h per ton of steel, however, the equipment is easily smashed by the scrap steel, and the large maintenance quantity affects the production. While CONSTEEL is a horizontal continuous feeding technique, can achieve the stable arc smelting of the electric furnace, is environmentally friendly and low in electrode consumption, and can greatly reduce the production process cost of the electric furnace, only the upper layer material of the scrap steel in the method is heated, and thus the scrap steel preheating effect is not good, and according to reports at home and abroad, the average energy saving effect is only 25 kw.h per ton of steel; in addition, since the heat exchange efficiency with the raw material (the scrap steel) needs to be increased, the stacking height of the scrap steel in the conveying tank is relatively thin on the conveyor belt, which necessarily increases the length of the pre-heating section, and the total length of the equipment of COMSTEEL for a large-scale electric arc furnace can be up to 90-100 m or more, which is very disadvantageous for the arrangement of the plant; again, the dynamic sealing air leakage of the method is more serious, which requires relatively large capacities of a draught fan etc.

In the scrap steel pre-heating technique of the shaft furnace, the main raw material of scrap steel needs to be lifted to the top opening of the shaft for feeding. In practical engineering, there are many methods for achieving material lifting, such as a crane (+ a material tank, a material basket, a material jar, etc.), a belt conveyor for continuous conveying, an inclined rail loading technique, various lifting mechanisms, and the like. In the electric furnace steel-making with scrap steel as the main raw material, due to the complex geometry of the scrap steel, for most equipment, the material flow is difficult to be unobstructed, and the sharp edges thereof easily cause material blocking and damage the conveying equipment, and therefore, reliable charging methods suitable for practical use are relatively limited, and the rather typical charging methods are a material tank, a material basket, a material hopper, etc. However, reliable equipment for raising the height of irregular scrap steel is also very limited, it is necessary to take into account the reliability of the equipment itself and the ability of emergency management for material blocking, a crane + material tank (material basket) lifting feeding mode is typical, but the crane of such feeding manner has a high occupation rate, a high operation difficulty and a low automation level, and is not suitable for the operation frequency demands of continuous feeding for smelting of electric arc furnaces.

Because of environmental problems of dioxin, some countries in Europe have prohibited the use of scrap steel preheating techniques, and therefore, how to ensure that the feeding apparatus is able to satisfy the requirements of environmentally friendlily policy in the future is also worth studying.

### Summary

In view of the above, an object of the present invention according to independent claim 1 is to provide an automatic feeding apparatus for an electric arc furnace, so as to solve the following problems:
I. solving the problem of poor distribution uniformity of stacked steel materials during the conveying process present in the existing feeding apparatus;
II. solving the problem of poor preheating efficiency present in the existing feeding apparatus;
III. solving the problem of poor loading efficiency present in the existing feeding apparatus; and
IV. solving the problem of generating dioxin due to scarp steel heating in the feeding apparatus.

The automatic feeding apparatus for an electric arc furnace in the present invention comprises a thermal feeding device and a cold feeding device, and further comprises an automatic distributing device provided between the cold feeding device and the thermal feeding device, wherein said automatic distributing device comprises a distributing tank and a first horizontally reciprocating vibration device provided at the bottom of the distributing tank, and at least one stepwise distributing section which is inclined from high to low along a material delivery direction is provided at the bottom of said distributing tank.

Further, the height of the stepwise distributing section is 1/20-1/2 of the average height of the scrap steel, the included angle between the bottom of said distributing tank and the horizontal plane is 8-35°, and the average dimension of said scarp steel = the sum of the largest lengths of various steel scrap blocks generally conveyed/the total number of the scrap iron blocks generally conveyed.

Further, the number of the steps of said stepwise distributing section is 2-30, and the individual steps are rigidly connected.

Further, said thermal feeding device comprises a thermal feeding tank, a smoke guiding hood provided at the upper part of the thermal feeding tank, and a second horizontally reciprocating vibration device provided at the back or bottom of the thermal feeding device.

Further, the bottom of said thermal feeding tank is stepwise, and the adjacent steps are hermetically connected.

Further, the bottom of said thermal feeding tank is of an inclined flat bottom structure.

Further, said thermal feeding tank is a double-duct conveying tank, which is arranged in an inclined form of being high at a feeding end and low at a discharging end, the middle part of said double-duct conveying tank is provided with a material carrier plate having smoke channels; a material flow duct is above the material carrier plate, and a smoke flow duct is below the material carrier plate; and the upper part of the material flow duct is open, said smoke guiding hood is provided with an auxiliary smoke suction port close to a higher end part of the material flow duct, and the higher end of said smoke flow duct is provided with a main smoke suction port.

Further, the lower end of said smoke flow duct is longer than the lower end of the material flow duct, and the longer portion forms a furnace entering section connected to the electric arc furnace.

Further, said material carrier plate is composed of unit plates stepwise arranged along the longitudinal direction of the double-duct conveying tank, said smoke channels are the gaps between the adjacent unit plates, and the orthographic projections of the ends of the adjacent unit plates on the horizontal plane are overlapped or butted.

Further, said unit plates are arranged to be horizontal or arranged to be inclined along the advancing direction of the materials, and said unit plates are flat plates or arc-shaped plates.

Further, burners are provided on the upper openings of said material flow duct.

Further, said automatic feeding apparatus for an electric arc furnace further comprises a turnover plate adjusting device for sealing the seam at the connection part between the thermal feeding device and the electric arc furnace.

Further, said smoke guiding hood is provided with at least one cross-sectional abrupt structure for disturbing the smoke flow regime.

Further, said cold feeding device comprises a cold feeding tank, a tank cover provided on a charging port of the cold feeding tank, and a third horizontally reciprocating vibration device at the bottom or back of the cold feeding tank.

Further, said cold feeding device, automatic distributing device and thermal feeding device are arranged side by side in a straight line, or arranged into an L shape.

Further, the connection part between said thermal feeding tank and distributing tank is provided with a sealing gate having a smoke sealing function.

Further, said automatic feeding apparatus for an electric arc furnace further comprises a loading device for feeding materials to the cold feeding device, said loading device comprises an inclined guide rail, a lift truck in cooperation with the inclined guide rail, a traction device for the lift truck and a charging hopper provided on the lift truck, a material gate is provided on the material drop port of said charging hopper, and an opening and closing mechanism which controls the opening and closing of the material gate is also provided on said charging hopper.

Further, the material drop port of said charging hopper faces towards the lower side face of the inclined guide rail, and the charging hopper also has an inclined material guiding plate for guiding the materials to the material drop port.

Further, a vibration device is provided at the bottom of said inclined material guiding plate.

Further, said material gate is hinged to the edge portion of the material drop port, said opening and closing mechanism comprises an oil cylinder hinged on the charging hopper and a connecting rod connecting the piston rod of the oil cylinder and the material gate, and said connecting rod is hingedly connected to the piston rod of the oil cylinder and the material gate, respectively.

Further, said opening and closing mechanism further comprises a self-locking rod, one end of said self-locking rod is hinged on the charging hopper, and the other end of the self-locking rod is hinged on the piston rod of the oil cylinder; and when the material gate is in a closed state, said self-locking rod and connecting rod are in a straight line.

Further, said traction device for the lift truck comprises a winch and a steel cable, one end of the steel cable is fixed on the lift truck, and the other end of the steel cable is wound on a power output shaft of the winch.

Further, said loading device further comprises a dedusting hood provided at the upper end of the inclined guide rail.

Further, said loading device further comprises a horizontal guide rail and a horizontal material delivery hopper in cooperation with the horizontal guide rail, and one end of said horizontal guide rail is located above the lower end of the inclined guide rail.

Further, said loading device further comprises at least one fixed material hopper provided along the horizontal guide rail and a charging device located above the fixed material hopper.

Further, said loading device comprises two sets of inclined guide rails parallelly arranged, two lift trucks respectively arranged on the two sets of inclined guide rails, two charging hoppers respectively arranged on the two lift trucks, and a winch for simultaneously driving the two lift trucks, and said two charging hoppers are respectively located at the upper end and the lower end of the guide rails.

Further, said automatic feeding apparatus for an electric arc furnace further comprises a PLC controller, a material level detector used for detecting the material level in the distributing tank, a first electronic weighing machine provided at the bottom of the cold feeding tank, and a second electronic weighing machine provided at the bottom of the thermal feeding tank, the detection signal output ends of said first electronic weighing machine, second electronic weighing machine and material level detector are connected to the signal input end of the PLC controller, and the signal output end of said PLC controller is connected to the signal input ends of the first horizontally reciprocating vibration device, the second horizontally reciprocating vibration device, the third horizontally reciprocating vibration device and the traction device for the lift truck, respectively.

The present invention has the following beneficial effects:
1. For the automatic feeding apparatus for an electric arc furnace in the present invention, the distributing device thereof enables forward throwing of the materials when falling down, which eliminates the problem that the rigidly tangled materials are difficult to be dispersed when performing an overall movement on a traditional conveying device, so that the materials can be effectively dispersed by vibration, the stacked materials can be uniformly and continuously distributed on the material conveying device, the scrap steel stacking and blocking problems of the materials are prevented from occurring at a throat portion of the feeding apparatus, and a high continuity, reliability and automation level of the production of the electric furnace can be ensured.
2. The distributing device allows the cold feeding device to use high stacking materials, and the feeding apparatus can be made relatively short; and this enables the long manual distributing conveyor belt of the disk crane of CONSTEEL with similar continuous feeding to become very compact, especially for large-scale electric furnaces, achieves the miniaturization of the automatic controllable feeding apparatus, and is beneficial for modification of the existing electric furnaces.
3. Compared with a horizontal conveyor belt, the automatic feeding apparatus for an electric arc furnace in the present invention greatly improves the conveying efficiency, and has lower power consumption, due to using an inclined tank for conveying.
4. For the automatic feeding apparatus for an electric arc furnace in the present invention, the thermal feeding device has different forms, regarding different energy saving, equipment cost and environmentally friendlily policy requirements, a double-duct conveying tank which is excellent in energy saving, a thermal feeding tank which has low cost and is closed and stepwise at the bottom and an environmentally friendly thermal feeding tank having an inclined flat bottom structure can be respectively used, and the thermal feeding device can be modulated so as to realize interchange.
   In the double-duct conveying tank, the materials have an increased contact area with the high-temperature smoke, and the smoke has a long retention time, and disperses and penetrates for heat exchange, thereby reducing the dust in the discharged smoke, and having a good material preheating effect.
   The bottom is a closed and stepwise thermal feeding tank, the steps can disturb the scrap steel and flowing smoke in conveying, so that the contact between the scrap steel and the smoke are relatively sufficient, the preheating effect of the scrap steel is also improved, and the apparatus is simple, reliable and convenient in maintenance.
   The thermal feeding tank of a flat bottom structure enables the scrap steel to have a high movement linear speed under the same vibration force, and rapidly pass through the thermal region to be immersed into a melting pond during the continuous feeding, thereby achieving the restraining of the generation of dioxin at source.
5. The automatic feeding apparatus for an electric arc furnace in the present invention realizes continuous feeding, which is greatly advantageous to decrease transformer capacity, reduce noise, and reduce power grid impact, and save electric energy.
6. For the automatic feeding apparatus for an electric arc furnace in the present invention, the loading device thereof, compared with a traditional crane operation, does not require a crane, has a convenient operation, can achieve an automatic operation, is of high reliability and high safety, suitable for high-frequency material loading, and faster than a crane in loading amount per hour, and can satisfy operation frequency demands of continuous feeding for smelting of medium to large-scale electric arc furnaces; and in this device, the manual processes of hooking and hoisting between a crane and a material basket/material tank for scrap steel in the conventional feeding device are omitted, a fully automated continuous production can be achieved, and the loading efficiency is high.
7. For the automatic feeding apparatus for an electric arc furnace in the present invention, the charging hopper of the loading device thereof is not rolled over during the loading process, the material discharging is completed through opening the material gate, the energy consumption is low, and the security of the overall apparatus at high position operation is improved; and by not rolling-over the charging hopper, it is possible to make the conveying capability of the charging hopper greater.
8. For the automatic feeding apparatus for an electric arc furnace in the present invention, the cold feeding device, distributing device and thermal feeding device thereof is modularized, the cold feeding device, distributing device and thermal feeding device can be manufactured into different specifications according to different requirements, when in use, the cold feeding device, distributing device and thermal feeding device of corresponding specifications can be assembled to obtain the feeding apparatus for an electric arc furnace meeting requirements, which is particularly suitable for old system modifications, and has a low refitting cost.
9. For the automatic feeding apparatus for an electric arc furnace in the present invention, the feeding apparatus is controlled through the combination of a PLC controller, a material level detector and an electronic weighing machine, thereby realizing automated feeding for steel-making, and better controlling the feeding speed and the distribution of the steel materials in the material tank.

### Brief Description of the Drawings

Fig. 1 is a first structural schematic diagram of the thermal feeding device of the present invention;

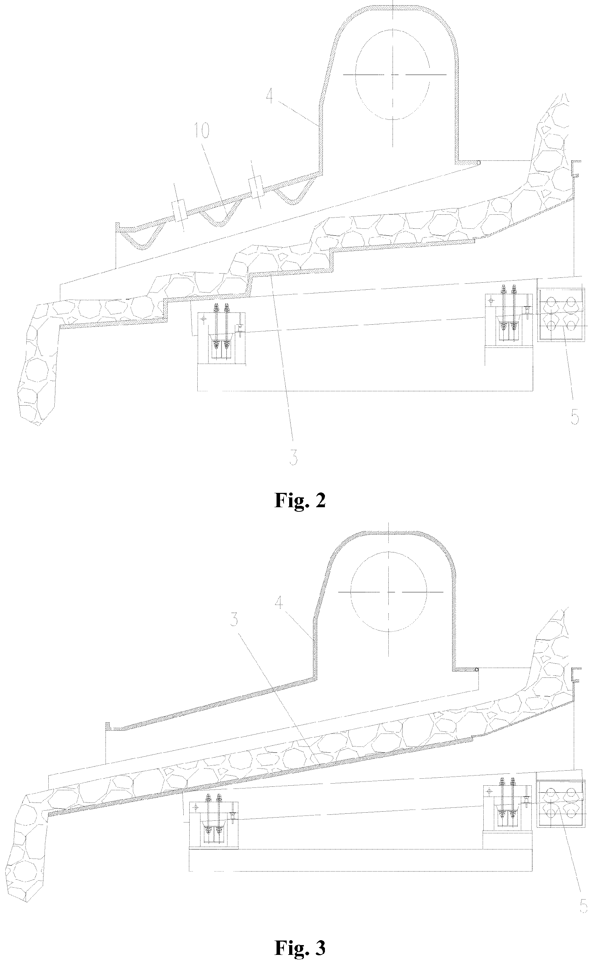

Fig. 2 is a second structural schematic diagram of the thermal feeding device of the present invention;
Fig. 3 is a third structural schematic diagram of the thermal feeding device of the present invention;
Fig. 4 is a structural schematic diagram of the cold feeding device of the present invention;
Fig. 5 is a first combined structural schematic diagram of the automatic feeding apparatus for an electric arc furnace in the present invention;
Fig. 6 is a second combined structural schematic diagram of the automatic feeding apparatus for an electric arc furnace in the present invention;
Fig. 7 is a third combined structural schematic diagram of the automatic feeding apparatus for an electric arc furnace in the present invention;
Fig. 8 is a fourth combined structural schematic diagram of the automatic feeding apparatus for an electric arc furnace in the present invention;
Fig. 9 is a fifth combined structural schematic diagram of the automatic feeding apparatus for an electric arc furnace in the present invention;
Fig. 10 is a structural schematic diagram of a charging hopper of the loading device in the present invention; and
Fig. 11 is a structural schematic diagram of an combined arrangement of two sets of loading devices.

### Description

The present invention will be further described below in conjunction with the accompanying drawings and embodiments.

As shown in the drawings, the automatic feeding apparatus for an electric arc furnace in the present embodiment comprises a thermal feeding device and a cold feeding device, and further comprises an automatic distributing tank provided between the cold feeding device and the thermal feeding device, wherein said automatic distributing device comprises a distributing tank 1 and a first horizontally reciprocating vibration device 2 provided at the bottom of the distributing tank 1, and at least one stepwise distributing section 101 which is inclined from high to low along a material delivery direction is provided at the bottom of said distributing tank.

When the automatic distributing device is in operation, the stepwise distributing section 101 is forced by the first horizontally reciprocating vibration device 2 to perform reciprocating vibrations; when passing through the stepwise distributing section 101, the materials freely slide down and perform an enhanced horizontal movement after being shocked by the horizontally reciprocating vibration steps, so that the rigidly tangled materials (such as scrap steel) are loosen and dispersed by vibration, and the material layer is thinned and uniformly distributed when the material speed is increased, which allows the high stacking materials in the cold feeding device after passing through the automatic distributing device to smoothly pass through a throat portion in the material delivery path to enter the thermal feeding device.

It should be noted that although the feeding tank of inclined flat bottom type in the prior art also can convey steel materials forward under the action of a horizontally reciprocating vibration device, experiments show that the scrap steel materials stacked thereon mainly move forward as a whole, the scrap steel materials are mutually tangled and difficult to disperse, and therefore, the stacked steel materials cannot be distributed and arranged again in the material conveying tank. The distributing tank 1 in the present embodiment re-distributes the scrap steel materials uniformly in the material tank due to its stronger vibration-dispersing function on the scrap steel materials, which eliminates the problem of material blocking present in the feeding tank of inclined flat bottom type, and therefore, the stacked scrap steel materials can be higher when charging, and the materials can be charged more each time, thereby reducing the number of feeding times of the feeding tank and improve the production efficiency and system reliability. At the same time, compared with a horizontal conveyor belt + a disk crane of COSTEEL, the present apparatus is small and compact, and flexible in mounting, and is more suitable for old factory modification and existing equipment utilization, reduce modification and investment costs, and also has lower energy consumption.

As an improvement to the present embodiment, the height of said stepwise distributing section 101 is 1/20-1/2 of the average dimension of the scrap steel, and the average dimension of said scarp steel = the sum of the largest lengths of various steel scrap blocks generally conveyed/the total number of the scrap iron blocks generally conveyed. In the present embodiment, the height value of the stepwise distributing section 101 is 1/2 of the average dimension of the scrap steel, and of course, in a different embodiment, the height of said stepwise distributing section 101 may be other values within the range of 1/20-1/2 of the average dimension of the scrap steel; and the height of the stepwise distributing section 101 has a preferred value range, if the height is too low, it would result in a poor effect of re-distributing the stacked scrap steel materials uniformly, and if the height is too high, it in turn causes poor continuous distribution of the scrap steel materials in the material tank.

As an improvement to the present embodiment, the number of the steps of said stepwise distributing section 101 is 2-30, the individual steps are rigidly connected, and the included angle between the individual steps and the horizontal plane is 8-35°. Of course, in a different embodiment, the number of the steps of said stepwise distributing section 101 may be other values within the range of 2-30, such as 2, 7, 15, 20, 25, 30, etc., and the specific number of the steps can be specifically set according to the height of the stepwise material section 101; and in general, the more the number of the steps, the higher the steps, the better, the uniform distribution effect of the materials results, but care should be taken to the spatial height and equipment investment.

In the present embodiment, said thermal feeding device comprises a thermal feeding tank 3, a smoke guiding hood 4 provided at the upper part of the thermal feeding tank 3, and a second horizontally reciprocating vibration device 5 provided at the bottom of the thermal feeding device 3.

In a specific implementation, the thermal feeding device can be modularized, and the thermal feeding tank 3 can be formed as a module with different structures. As for the thermal feeding tank 3, the bottom thereof can be stepwise, the adjacent steps are hermetically connected, the structure and function of the bottom steps of the thermal feeding tank 3 of such a structure are different from those of the automatic distributing device, the step horizontal sections (or small angle sections) of the thermal feeding tank 3 are longer, the materials can be dispersed by vibration when crossing the steps, while the movement of the materials tend to be stable on the straight sections after the steps, the materials are in discontinuous and uneven steps as a whole, which thus can have an obstructing function on the smoke, and can enhance the heat exchange between the smoke and the materials, and improve the preheating effect. Still as for said thermal feeding tank 3, the bottom thereof is of an inclined flat bottom structure, and the scrap steel in the thermal feeding tank 3 of such a structure has a large movement linear speed, which can enable the scrap steel to rapidly pass through the thermal region to be immersed into a melting pond during the continuous feeding, and restraining the formation of dioxin at source is achieved through shortening the exposure time in the thermal region and the surface temperature of the scrap steel, and is beneficial for environmental protection.

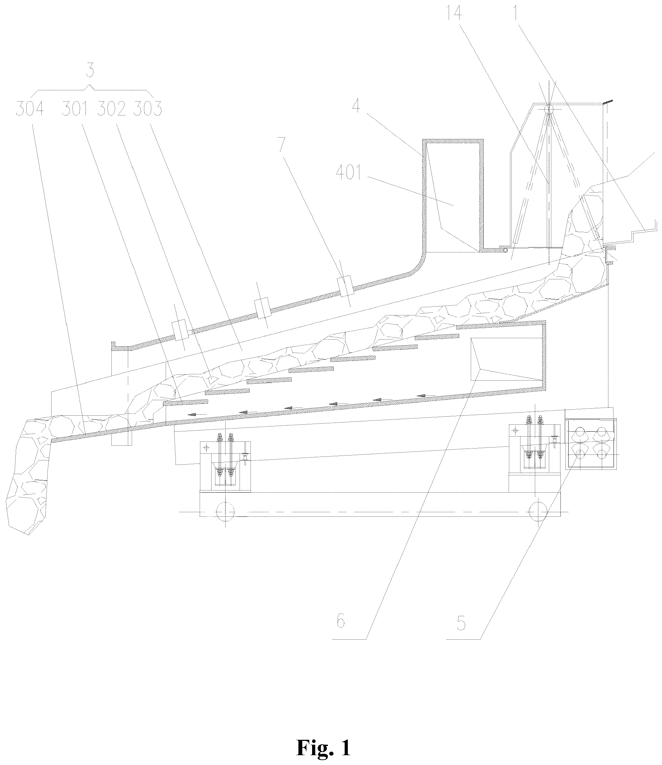

In the present embodiment, the thermal feeding tank 3 in said automatic feeding apparatus for an electric arc furnace is a double-duct conveying tank, as shown in Fig. 1, said double-duct conveying tank is arranged in an inclined form of being high at a feeding end and low at a discharging end, the middle part of said double-duct conveying tank is provided with a material carrier plate 301 having smoke channels; a material flow duct 302 is above the material carrier plate 301, and a smoke flow duct 303 is below the material carrier plate 301; said smoke guiding hood 4 is provided with an auxiliary smoke suction port 401 close to a higher end part of the material flow duct, and the higher end of said smoke flow duct is provided with a main smoke suction port 6.

The thermal feeding tank 3 is of a structure of a double-duct conveying tank, the smoke penetrates the smoke channels on the material carrier plate 301 to enter the smoke flow duct 303, some dust and small dropped material blocks also enter or sediment into the smoke flow duct 303, and under the vibration conditions, the dust and small dropped material blocks are transported into the electric furnace. By adjusting the opening degrees of the auxiliary smoke suction port 401 and the main smoke suction port 6, the preheating temperature and preheating portion of the materials may be appropriately adjusted to reach an optimum preheating effect; and under the conditions of the same preheating effect, the size of the present apparatus can be greatly shorten.

As an improvement to the present embodiment, the lower end of said smoke flow duct 303 is longer than the lower end of the material flow duct 302, and the longer portion forms a furnace entering section 304 connected to the electric arc furnace. Such a structure enables the materials after coming out of the material flow duct 302 to first enter the furnace entering section 304, and then enter the electric furnace from the furnace entering section 304; and such a structure enables the high-temperature smoke in the electric furnace to enter the smoke flow duct 303 only after necessarily passing through the materials.

As an improvement to the present embodiment, said material carrier plate 301 is composed of unit plates stepwise arranged along the longitudinal direction of the double-duct conveying tank, said smoke channels are the gaps between the adjacent unit plates, and the orthographic projections of the ends of the adjacent unit plates on the horizontal plane are overlapped. Said smoke channels are the gaps between the adjacent unit plates, and the orthographic projections of the ends of the adjacent unit plates on the horizontal plane are overlapped; the material carrier plate 301 of such a structure can prevent the materials from falling into the smoke flow duct 302 from the smoke channels, and can avoid material blocking in the smoke channels; of course, in a specific implementation, the orthographic projections of the ends of the adjacent unit plates on the horizontal plane may also be in a butting state. Or the material carrier plate 301 can also be an integral plate with gas permeable holes, but the gas permeable holes need to be rationally designed during design, so as to avoid material blocking and material leakage.

As an improvement to the present embodiment, said unit plates are arranged to be inclined along the advancing direction of the materials, and such a structure can allow the material movement to be more smooth; of course, in a different embodiment, said unit plates can also be arranged to be horizontal; and in the present embodiment, said unit plates are flat plates, and of course, in a different embodiment, they may also be arc-shaped plates which have a better strength and can increase the gas permeable gaps of the materials.

As an improvement to the present embodiment, burners 7 are provided on the upper openings of said material flow duct 302, and the preheating effect of the materials can be further improved by the burners 7.

As an improvement to the present embodiment, the automatic feeding apparatus for an electric arc furnace in the present invention further comprises a turnover plate adjusting device for sealing the seam at the connection part between the thermal feeding device and the electric arc furnace, and in a specific implementation, said turnover plate adjusting device can be composed of a turnover plate 8 hinged on the smoke guiding hood 4 and an air cylinder 9 for driving the turnover plate to rotate. Such a structure can avoid the outleakage of the hot smoke in the electric arc furnace, which is beneficial to save energy.

As an improvement to the smoke guiding hood 4 described in the present embodiment, said smoke guiding hood 4 is provided with at least one cross-sectional abrupt structure 10 for disturbing the smoke flow regime, and this improvement can further prolong the contact time between the hot smoke and the steel materials, with a better preheating effect.

In the automatic feeding apparatus for an electric arc furnace of the present embodiment, said cold feeding device comprises a cold feeding tank 11, a tank cover 12 provided on a charging port of the cold feeding tank 11, and a third horizontally reciprocating vibration device 13 at the bottom of the cold feeding tank 11.

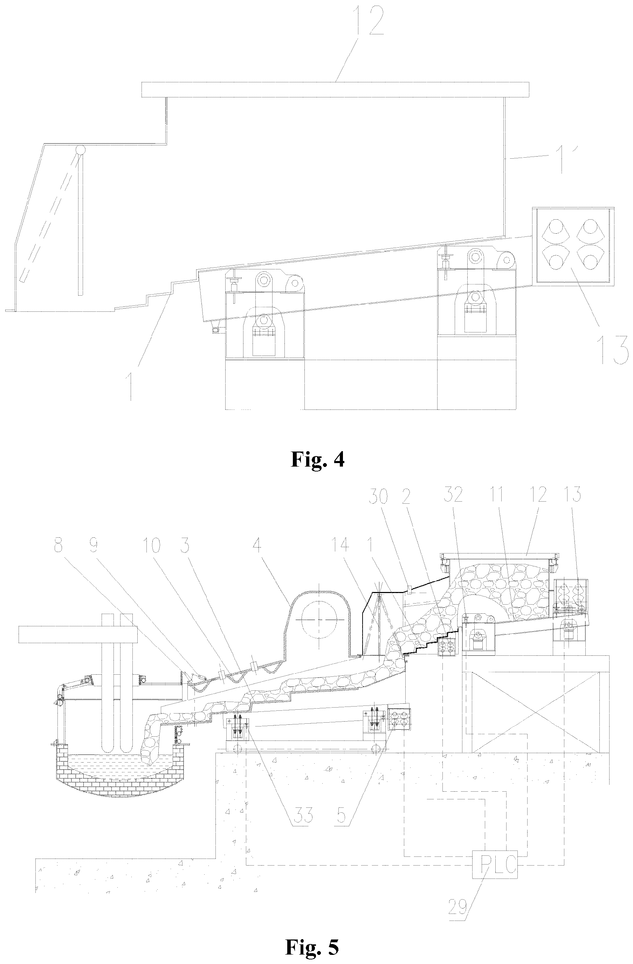

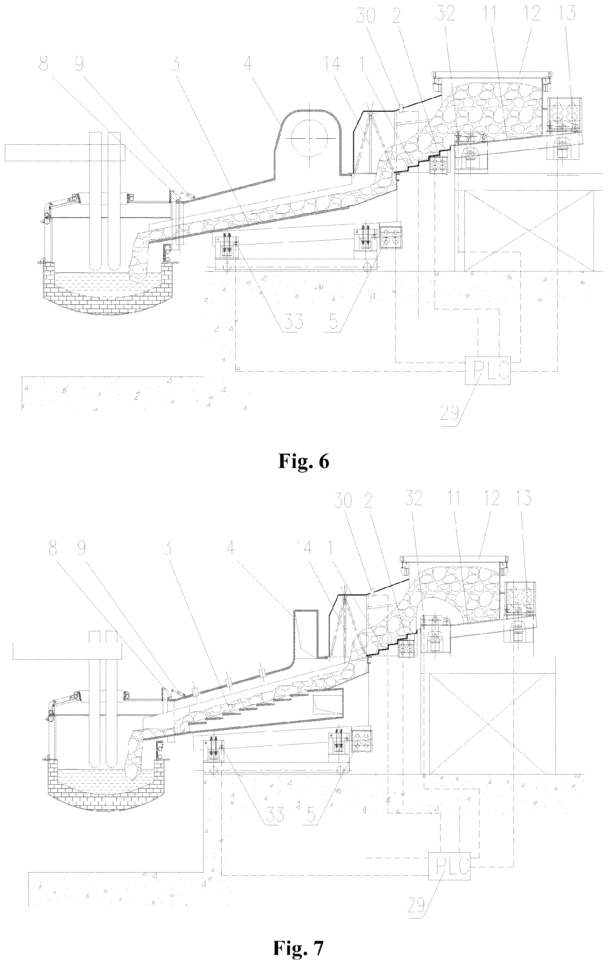

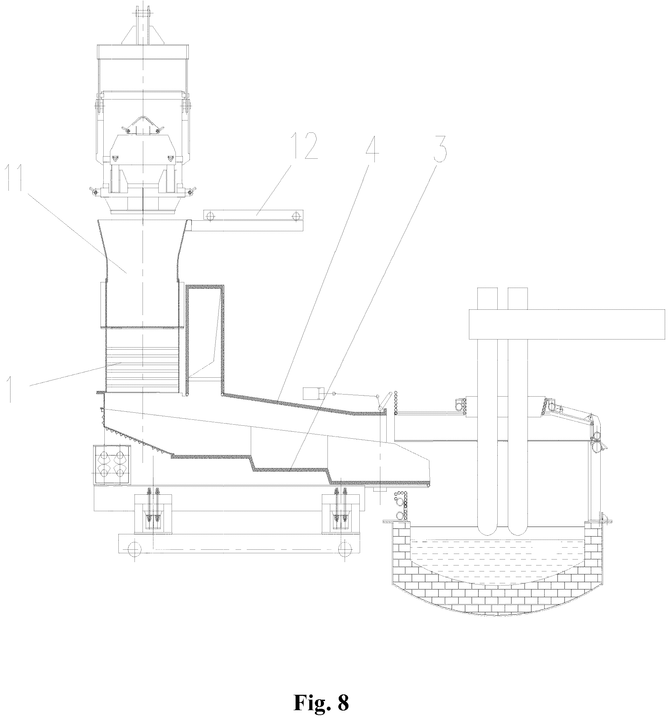

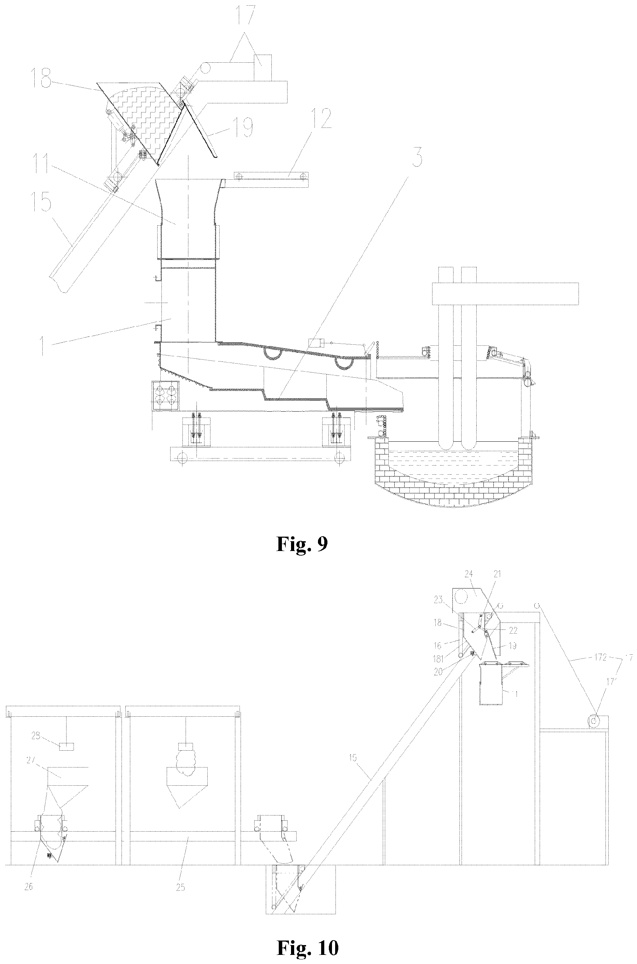

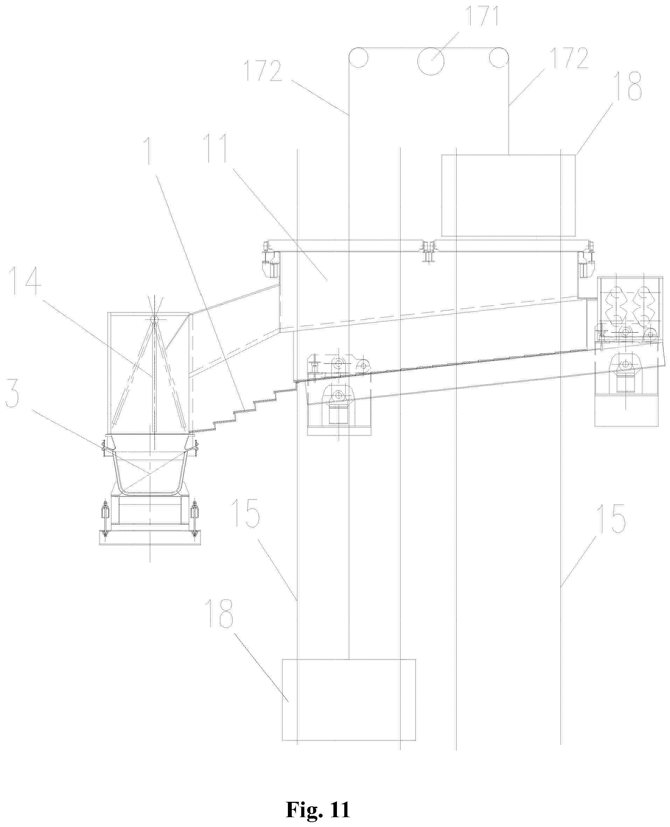

In a specific implementation, said cold feeding device, automatic distributing device and thermal feeding device can be arranged side by side in a straight line, and may also be arranged into an L shape. As shown in Figs 5, 6 and 7, said cold feeding device, automatic distributing device and thermal feeding device are arranged side by side in a straight line; and as shown in Figs 8 and 9, said cold feeding device, automatic distributing device and thermal feeding device are arranged arranged into an L shape. Moreover, as shown in Fig. 4 and Fig. 11, the stepwise distributing section 101 in said automatic distributing device can also be integrated with the cold feeding tank 11 of the cold feeding device, so that the third horizontally reciprocating vibration device 13 of the cold feeding device 11 can be used a common vibration source for the automatic distributing device and the cold feeding device to simplify the apparatus and reduce the investment.

For the automatic feeding apparatus for an electric arc furnace in the present embodiment, the cold feeding device, automatic distributing device and thermal feeding device thereof can be modularized, i.e. the cold feeding device, automatic distributing device and thermal feeding device can be manufactured into different specifications according to requirements of different users, when in use, the cold feeding device, automatic distributing device and thermal feeding device of corresponding specifications can be assembled to obtain an automatic feeding apparatus for an electric arc furnace meeting requirements, which is particularly suitable for old system modifications, and has a low refitting cost and a short modification cycle.

In the present embodiment, said cold feeding device, automatic distributing device and thermal feeding device are arranged side-by-side in a straight line, a sealing gate 14 having a smoke sealing function is provided at the connection part between the thermal feeding tank and the distributing tank 1, and such a structure can avoid the outleakage of the hot smoke in the electric arc furnace, which is beneficial to save energy.

In the present embodiment, said automatic feeding apparatus for an electric arc furnace further comprises a loading device for feeding materials to the cold feeding device, said loading device comprises an inclined guide rail 15, a lift truck 16 in cooperation with the inclined guide rail, a traction device 17 for the lift truck 16 and a charging hopper 18 provided on the lift truck, a material gate 19 is provided on the material drop port of said charging hopper 18, and an opening and closing mechanism which controls the opening and closing of the material gate is also provided on said charging hopper 18.

When loading, under the combined action of gravity and the traction device 17 for the lift truck, the lift truck 16 is lowered to the lower end of the inclined guide rail 15, and the materials are added to the charging hopper18; then under the action of the traction device 17 for the lift truck, the lift truck 16 rises along the inclined guide rail 15, and when the material drop port of the charging hopper 18 is located above the charging port of the cold feeding tank 11, the traction device 17 for the lift truck controls the lift truck 16 to stop; and finally, the opening and closing mechanism controls the material gate 19 to open, and the materials are placed into the cold feeding tank 11. Compared with the existing loading device, this high-position automatic loading device does not require a crane, has a convenient operation, can achieve an automatic operation, and is of high reliability and high safety; and this device is suitable for high-frequency material loading, and is faster than a crane in loading amount per hour, and can satisfy operation frequency demands of continuous feeding for smelting of medium to large-scale electric arc furnaces; and in this device, the manual processes of hooking and hoisting between a crane and a material basket/material tank for scrap steel in the conventional feeding device are omitted, a fully automated continuous production can be achieved, and the loading efficiency is high. Moreover, for this high-position automatic loading device, the charging hopper 18 thereof is not rolled over during the loading process, the material discharging is completed through opening the material gate 19, the energy consumption is low, and the security of the overall apparatus at high position operation is improved; and by not rolling-over the charging hopper 18, it is possible to make the conveying capability of the charging hopper 18 greater.

As an improvement to the present embodiment, the material drop port of said charging hopper 18 faces towards the lower side face of the inclined guide rail 15, and the charging hopper 18 also has an inclined material guiding plate 181 for guiding the materials to the material drop port. During the material lifting, the majority of the material weight is borne by the inclined material guiding plate 181, such that the force on the material gate 19 is relatively small, the material gate 19 and the opening and closing mechanism can be protected, and the apparatus failure rate is reduced. In a specific implementation, the angle of inclination of the inclined material guiding plate 181 must be greater than the frictional angle of the materials, and the lower opening of the material hopper is slightly open downward to achieve smooth material discharge. At the same time, the material drop port faces towards the lower side face of the inclined guide rail 15, so that the distance for the materials to fall from the charging hopper 18 into a material receiving device of the electric furnace is shortest, and the shock to the material receiving device caused by the materials can be reduced.

As an improvement to the present embodiment, a vibration device 20 is provided at the bottom of the inclined material guiding plate 181. Opening the vibration device 20 can allow the charging hopper 18 to vibrate for material drop when there are blocking and retardation, thereby causing the device to fully discharge the materials.

As an improvement to the present embodiment, said material gate 19 is hinged to the edge portion of the material drop port, said opening and closing mechanism comprises an oil cylinder 21 hinged on the charging hopper 18 and a connecting rod 22 connecting the piston rod of the oil cylinder and the material gate 19, and said connecting rod 22 is hingedly connected to the piston rod of the oil cylinder and the material gate 19, respectively. The opening and closing of the material gate 19 are achieved through pushing the material gate 19 by the oil cylinder 21 to rotate about a hinge axis, and the control is convenient. Of course, in a different embodiment, the opening and closing mechanism may take a variety of forms, for example, the material gate 19 can be controlled to rotate about the hinge axis by a winch.

As an improvement to the present embodiment, said opening and closing mechanism further comprises a self-locking rod 23, one end of the self-locking rod 23 is hinged on the charging hopper 18, and the other end of the self-locking rod 23 is hinged on the piston rod of the oil cylinder; when the material gate 19 is in a closed state, said self-locking rod 23 and connecting rod 22 are in a straight line, at this point, 19 is in a self-locking state, the oil cylinder 21 does not exert a force or exerts a relatively small force to ensure that the material gate 19 is in a closed state, and the energy consumption can be reduced.

As an improvement to the present embodiment, said traction device 17 for the lift truck comprises a winch 171 and a steel cable 172, one end of said steel cable 172 is fixed on the lift truck 16, and the other end of the steel cable 172 is wound on a power output shaft of the winch 171; and the lift truck 16 is controlled to move along the inclined guide rail 15 through retracting and releasing the steel cable 172 by the winch 171, and the structure is simple and convenient to implement.

As an improvement to the present embodiment, said loading device further comprises a dedusting hood 24 provided at the upper end of the inclined guide rail 15. The dust during the discharging process enters the dedusting hood 24, and the dust in the dedusting hood 24 can be pump off by a dedusting fan, thereby ensuring the on-site air environment quality.

As an improvement to the present embodiment, said loading device further comprises a horizontal guide rail 25 and a horizontal material delivery hopper 26 in cooperation with the horizontal guide rail, and one end of said horizontal guide rail 25 is located above the lower end of the inclined guide rail 15. When loading, the charging hopper 18 is located at the lower end of the inclined guide rail 15, the horizontal material delivery hopper 26 moves along the horizontal guide rail 25 to be above the charging hopper 18, the materials are placed into the charging hopper 18, and the horizontal material delivery hopper 26 is used for transferring the materials in the low-position charging device into the charging hopper 18; and in a specific implementation, the structure of the horizontal material delivery hopper 26 may be the same as the structure of the charging hopper 18.

As an improvement to the present embodiment, said loading device further comprises at least one fixed material hopper 27 provided along the horizontal guide rail 25 and a charging device 28 located above the fixed material hopper. The number of said fixed material hoppers 27 is two in the present embodiment, and of course, in a different embodiment, the number of said fixed material hoppers 27 can be changed according to actual requirements; and The charging device 28 at the low position transfers the materials into the fixed material hopper 27, the horizontal material delivery hopper 26 moves along the horizontal guide rail 25 to receive the materials in the fixed material hopper 27, and then transfers the materials into the charging hopper 18. This loading device transports the materials from a lower position to a higher position, and the entire material transporting process can fully achieve an automated operation, with a high material transporting efficiency.

As an improvement to the present embodiment, the present automatic feeding apparatus for an electric arc furnace further comprises a PLC controller 29, a material level detector 30 used for detecting the material level in the distributing tank 1, a first electronic weighing machine 32 provided at the bottom of the cold feeding tank 11, and a second electronic weighing machine 33 provided at the bottom of the thermal feeding tank 3, the detection signal output ends of said first electronic weighing machine 32, second electronic weighing machine 33 and material level detector 30 are connected to the signal input end of the PLC controller 29, and the signal output end of said PLC controller 29 is connected to the signal input ends of the first horizontally reciprocating vibration device 2, the second horizontally reciprocating vibration device 5, the third horizontally reciprocating vibration device 13 and the traction device 17 for the lift truck, respectively.

As an improvement to the present embodiment, as shown in Fig. 5, said loading device comprises two sets of inclined guide rails 15 parallelly arranged, two lift trucks 16 respectively arranged on the two sets of inclined guide rails, two charging hoppers 18 respectively arranged on the two lift trucks, and a winch 171 for simultaneously driving the two lift trucks, said two charging hoppers 18 are respectively located at the upper end and the lower end of the guide rails, and the mass balance between the loading hoppers and the two lift trucks on the two rails is achieved through the steel cable 172; such a method adopts two charging hopper 18 for loading, with a high loading frequency and a rapid loading speed, and the driving power of the traction device 17 for the lift truck is greatly reduced; and accordingly, the horizontal guide rail 25, the horizontal material delivery hopper 26 and the fixed material hopper 27 should also be in two lines.

In the present embodiment, the feeding amount can be accurately known through the first electronic weighing machine 32 and the second electronic weighing machine 33, the automatic control of the entire feeding process can be achieved by the PLC controller 29, for example when the input weight signal of the first electronic weighing machine 32 is greater than a pre-set value, the PLC controller 29 can send a control signal to the traction device 17 for the lift truck so as to slow the loading speed, and can also input a control signal to the third horizontally reciprocating vibration device 13 to improve the vibration frequency thereof, such that the materials in the cold feeding tank 11 is quickly output; furthermore, when the input material level signal of the material level detector 30 is greater than a pre-set value, the PLC controller 29 would output a control signal to the first horizontally reciprocating vibration device 2 so as to control the first horizontally reciprocating vibration device 2 to improve the vibration frequency, thereby enhancing the vibration of the distributing tank 1, and rendering the materials to be better dispersed by vibration and distributed evenly.

Finally, it is noted that the above embodiments are only used to illustrate the technical solutions in the present invention, but not limiting, and although the present invention has been described in detail with reference to preferred embodiments, a person skilled in the art should understand that, modifications and equivalent replacements can be made to the technical solutions of the present invention, without departing from the purpose and scope of the technical solutions of the present invention, all of which should be encompassed within the scope of the appended claims of the present invention.

## Claims

1. An automatic feeding apparatus for an electric arc furnace, comprising a thermal feeding device and a cold feeding device, wherein an automatic distributing device is provided between the cold feeding device and the thermal feeding device, wherein said automatic distributing device comprises a distributing tank (1) and a first horizontally reciprocating vibration device (2) provided at the bottom of the distributing tank (1), wherein at least one stepwise distributing section (101) which is inclined from high to low along a material delivery direction is provided at the bottom of said distributing tank (1), **characterized in that** an angle between the bottom of said distributing tank (1) and horizontal plane is 8-35°, said thermal feeding device comprising a thermal feeding tank (3), a smoke guiding hood (4) provided at the upper part of the thermal feeding tank (3), and a second horizontally reciprocating vibration device (5) provided at the back or bottom of the thermal feeding device, wherein the thermal feeding device is modularizable, and the thermal feeding tank (3) is formed as a module with different structures.

2. The apparatus according to claim 1, **characterized in that** the number of the steps of said stepwise distributing section (101) is 2-30, and the individual steps are rigidly connected.

3. The apparatus according to claim 1, **characterized in that** the bottom of said thermal feeding tank (3) is stepwise, and the adjacent steps are hermetically connected.

4. The apparatus according to claim 1, **characterized in that** the bottom of said thermal feeding tank (3) is of an inclined flat bottom structure.

5. The apparatus according to claim 1, **characterized in that** said thermal feeding tank (3) is a double-duct conveying tank, which is arranged in an inclined form of being high at a feeding end and low at a discharging end, the middle part of said double-duct conveying tank is provided with a material carrier plate (301) having smoke channels; a material flow duct (302) is above the material carrier plate (301), and a smoke flow duct (303) is below the material carrier plate (301); and the upper part of the material flow duct (302) is open, said smoke guiding hood (4) is provided with an auxiliary smoke suction port (401) close to a higher end part of the material flow duct (302), and the higher end of said smoke flow duct (303) is provided with a main smoke suction port (6), wherein the lower end of said smoke flow duct (303) preferably is longer than the lower end of the material flow duct (302), and the longer portion forms a furnace entering section (304) connected to the electric arc furnace, wherein said material carrier plate (301) preferably is composed of unit plates stepwise arranged along the longitudinal direction of the double-duct conveying tank, said smoke channels are the gaps between the adjacent unit plates, and the orthographic projections of the ends of the adjacent unit plates on the horizontal plane are overlapped or butted, and wherein said unit plates preferably are arranged to be horizontal or arranged to be inclined along the advancing direction of the materials, and said unit plates are flat plates or arc-shaped plates.

6. The apparatus according to claim 5, **characterized in that** burners (7) are provided on the upper openings of said material flow duct (302).

7. The apparatus according to claim 6, **characterized by** further comprising a turnover plate adjusting device for sealing the seam at the connection part between the thermal feeding device and the electric arc furnace, wherein said smoke guiding hood (4) preferably is provided with at least one cross-sectional abrupt structure (10) for disturbing the smoke flow regime.

8. The apparatus according to claim 1, **characterized in that** said cold feeding device comprises a cold feeding tank (11), a tank cover (12) provided on a charging port of the cold feeding tank (11), and a third horizontally reciprocating vibration device (13) at the bottom or back of the cold feeding tank (11).

9. The apparatus according to claim 1, **characterized in that** said cold feeding device, automatic distributing device and thermal feeding device are arranged into a straight line in series or arranged into an L shape in series, wherein the connection part between said thermal feeding tank (3) and distributing tank (1) preferably is provided with a sealing gate (14) having a smoke sealing function.

10. The apparatus according to any one of the preceding claims, **characterized by** further comprising a loading device for feeding materials to the cold feeding device, said loading device comprises an inclined guide rail (15), a lift truck (16) in cooperation with the inclined guide rail (15), a traction device (17) for the lift truck and a charging hopper (18) provided on the lift truck (16), a material gate (19) is provided on the material drop port of said charging hopper (18), and an opening and closing mechanism which controls the opening and closing of the material gate is also provided on said charging hopper (18).

11. The apparatus according to claim 10, **characterized in that** the material drop port of said charging hopper (18) faces towards the lower side face of the inclined guide rail (15), and the charging hopper (18) also has an inclined material guiding plate (181) for guiding the materials to the material drop port, wherein a vibration device (20) preferably is provided at the bottom of said inclined material guiding plate (181), and wherein said material gate (19) preferably is hinged to the edge portion of the material drop port, said opening and closing mechanism comprises an oil cylinder (21) hinged on the charging hopper (18) and a connecting rod (22) connecting the piston rod of the oil cylinder and the material gate (19), and said connecting rod (22) is hingedly connected to the piston rod of the oil cylinder and the material gate (19), respectively.

12. The apparatus according to claim 11, **characterized in that** said opening and closing mechanism further comprises a self-locking rod (23), one end of said self-locking rod (23) is hinged on the charging hopper (18), and the other end of the self-locking rod (23) is hinged on the piston rod of the oil cylinder; and when the material gate (19) is in a closed state, said self-locking rod (23) and connecting rod (22) are in a straight line, whereint said traction device (17) for the lift truck preferably comprises a winch (171) and a steel cable (172), one end of said steel cable (172) is fixed on the lift truck (16), and the other end of the steel cable (172) is wound on a power output shaft of the winch (171), and wherein said loading device preferably further comprises a dedusting hood (24) provided at the upper end of the inclined guide rail (15).

13. The apparatus according to claim 12, **characterized in that** said loading device further comprises a horizontal guide rail (25) and a horizontal material delivery hopper (26) in cooperation with the horizontal guide rail (25), and one end of said horizontal guide rail (25) is located above the lower end of the inclined guide rail (15), wherein said loading device preferably further comprises at least one fixed material hopper (27) provided along the horizontal guide rail (25) and a charging device (28) located above the fixed material hopper (27).

14. The apparatus according to claim 13, **characterized in that** said loading device comprises two sets of inclined guide rails (15) parallelly arranged, two lift trucks (16) respectively arranged on the two sets of inclined guide rails (15), two charging hoppers (18) respectively arranged on the two lift trucks (16), and a winch (171) for simultaneously driving the two lift trucks (16), and said two charging hoppers (18) are respectively located at the upper end and the lower end of the guide rails.

15. The apparatus according to claim 10, **characterized by** further comprising a PLC controller (29), a material level detector (30) used for detecting the material level in the distributing tank (1), a first electronic weighing machine (32) provided at the bottom of the cold feeding tank (11), and a second electronic weighing machine (33) provided at the bottom of the thermal feeding tank (3), the detection signal output ends of said first electronic weighing machine (32), second electronic weighing machine (33) and material level detector (30) are connected to the signal input end of the PLC controller (29), and the signal output end of said PLC controller is connected (29) to the signal input ends of the first horizontally reciprocating vibration device (2), the second horizontally reciprocating vibration device (5), the third horizontally reciprocating vibration device (13) and the traction device (17) for the lift truck, respectively.

## Patentansprüche

1. Automatische Zuführvorrichtung für einen elektrischen Lichtbogenofen, die eine thermische Zuführeinrichtung und eine Kaltzuführeinrichtung umfasst, wobei eine automatische Verteilungseinrichtung zwischen der Kaltzuführeinrichtung und der thermischen Zuführeinrichtung bereitgestellt ist, wobei die automatische Verteilungseinrichtung einen Verteilungsbehälter (1) und eine erste sich horizontal hin- und herbewegende Schwingungseinrichtung (2), die an dem Boden des Verteilungsbehälters (1) bereitgestellt ist, umfasst, wobei mindestens ein stufenweiser Verteilungsabschnitt (101), der von hoch zu niedrig entlang einer Materiallieferrichtung geneigt ist, an dem Boden des Verteilungsbehälters (1) bereitgestellt ist, **dadurch gekennzeichnet, dass** ein Winkel zwischen dem Boden des Verteilungsbehälters (1) und einer horizontalen Ebene 8-35° beträgt, die thermische Zuführeinrichtung einen thermischen Zuführbehälter (3), eine Rauchführungshaube (4), die an dem oberen Teil des thermischen Zuführbehälters (3) bereitgestellt ist, und eine zweite sich horizontal hin- und herbewegende Schwingungseinrichtung (5), die an der Rückseite oder dem Boden der thermischen Zuführeinrichtung bereitgestellt ist, umfasst, wobei die thermische Zuführeinrichtung modularisierbar ist und der thermische Zuführbehälter (3) als ein Modul mit unterschiedlichen Strukturen gebildet ist.

2. Vorrichtung nach Anspruch 1, **dadurch gekennzeichnet, dass** die Anzahl der Stufen des stufenweisen Verteilungsabschnitts (101) 2-30 beträgt und die einzelnen Stufen starr verbunden sind.

3. Vorrichtung nach Anspruch 1, **dadurch gekennzeichnet, dass** der Boden des thermischen Zuführbehälters (3) stufenweise ist und die benachbarten Stufen hermetisch verbunden sind.

4. Vorrichtung nach Anspruch 1, **dadurch gekennzeichnet, dass** der Boden des thermischen Zuführbehälters (3) von einer geneigten flachen Bodenstruktur ist.

5. Vorrichtung nach Anspruch 1, **dadurch gekennzeichnet, dass** der thermische Zuführbehälter (3) ein Doppelleitung-Förderbehälter ist, der in einer geneigten Form angeordnet ist, in der er an einem Zuführende hoch und an einem Auslassende niedrig ist, wobei der Mittelteil des Doppelleitung-Förderbehälters mit einer Materialträgerplatte (301) bereitgestellt ist, die Rauchkanäle hat, eine Materialströmungsleitung (302) über der Materialträgerplatte (301) ist und eine Rauchströmungsleitung (303) unter der Materialträgerplatte (301) ist und der obere Teil der Materialströmungsleitung (302) offen ist, die Rauchführungshaube (4) mit einem Hilfsrauchsauganschluss (401) nahe einem höheren Endteil der Materialströmungsleitung (302) bereitgestellt ist und das höhere Ende der Rauchströmungsleitung (303) mit einem Hauptrauchsauganschluss (6) bereitgestellt ist, wobei das untere Ende der Rauchströmungsleitung (303) vorzugsweise länger ist als das untere Ende der Materialströmungsleitung (302) und der längere Abschnitt einen Ofeneingabeabschnitt (304) bildet, der mit dem elektrischen Lichtbogenofen verbunden ist, wobei die Materialträgerplatte (301) vorzugsweise aus Einheitsplatten besteht, die stufenweise entlang der Längsrichtung des Doppelleitung-Förderbehälters angeordnet sind, die Rauchkanäle Lücken zwischen den benachbarten Einheitsplatten sind und die orthografischen Vorsprünge der Enden der benachbarten Einheitsplatten auf der horizontalen Ebene überlappen oder anstoßen, und wobei die Einheitsplatten vorzugsweise horizontal angeordnet sind oder entlang der Vorrückrichtung der Materialien geneigt angeordnet sind und die Einheitsplatten flache Platten oder bogenförmige Platten sind.

6. Vorrichtung nach Anspruch 5, **dadurch gekennzeichnet, dass** Brenner (7) auf den oberen Öffnungen der Materialströmungsleitung (302) bereitgestellt sind.

7. Vorrichtung nach Anspruch 6, **dadurch gekennzeichnet, dass** sie ferner eine Wendeplatte-Einstelleinrichtung zum Abdichten der Naht an dem Verbindungsteil zwischen der thermischen Zuführeinrichtung und dem elektrischen Lichtbogenofen umfasst, wobei die Rauchführungshaube (4) vorzugsweise mit mindestens einer abrupten Querschnittsstruktur (10) zum Stören des Rauchströmungsregimes bereitgestellt ist.

8. Vorrichtung nach Anspruch 1, **dadurch gekennzeichnet, dass** die Kaltzuführeinrichtung einen Kaltzuführbehälter (11), eine Behälterabdeckung (12), die auf einem Einfüllanschluss des Kaltzuführbehälters (11) bereitgestellt ist, und eine dritte sich horizontal hin- und herbewegende Schwingungseinrichtung (13) an dem Boden oder der Rückseite des Kaltzuführbehälters (11) umfasst.

9. Vorrichtung nach Anspruch 1, **dadurch gekennzeichnet, dass** die Kaltzuführeinrichtung, automatische Verteilungseinrichtung und thermische Zuführeinrichtung in einer geraden Linie in Reihe angeordnet sind oder in einer L-Form in Reihe angeordnet sind, wobei der Verbindungsteil zwischen dem thermischen Zuführbehälter (3) und dem Verteilungsbehälter (1) vorzugsweise mit einem Dichttor (14) bereitgestellt ist, das eine Rauchabdichtungsfunktion hat.

10. Vorrichtung nach einem der vorhergehenden Ansprüche, **dadurch gekennzeichnet, dass** sie ferner eine Ladeeinrichtung zum Zuführen von Materialien zu der Kaltzuführeinrichtung umfasst, wobei die Ladeeinrichtung eine geneigte Führungsschiene (15), einen Hubwagen (16) in Zusammenwirkung mit der geneigten Führungsschiene (15), eine Zugeinrichtung (17) für den Hubwagen und einen Einfülltrichter (18), der auf dem Hubwagen (16) bereitgestellt ist, umfasst, wobei ein Materialtor (19) auf dem Materialfallanschluss des Einfülltrichters (18) bereitgestellt ist und ein Öffnungs- und Schließmechanismus, der das Öffnen und Schließen des Materialtors steuert, auch auf dem Einfülltrichter (18) bereitgestellt ist.

11. Vorrichtung nach Anspruch 10, **dadurch gekennzeichnet, dass** der Materialfallanschluss des Einfülltrichters (18) hin zu der unteren Seitenfläche der geneigten Führungsschiene (15) gewandt ist und der Einfülltrichter (18) auch eine geneigte Materialführungsplatte (181) zum Führen der Materialien zu dem Materialfallanschluss hat, wobei eine Schwingungseinrichtung (20) vorzugsweise an dem Boden der geneigten Materialführungsplatte (181) bereitgestellt ist und wobei das Materialtor (19) vorzugsweise an dem Randabschnitt des Materialfallanschlusses gelenkig angebracht ist, wobei der Öffnungs- und Schließmechanismus einen Ölzylinder (21), der auf dem Einfülltrichter (18) gelenkig angebracht ist, und eine Pleuelstange (22), die die Kolbenstange des Ölzylinders und das Materialtor (19) verbindet, umfasst, und die Pleuelstange (22) jeweils mit der Kolbenstange des Ölzylinders und dem Materialtor (19) gelenkig verbunden ist.

12. Vorrichtung nach Anspruch 11, **dadurch gekennzeichnet, dass** der Öffnungs- und Schließmechanismus ferner eine selbstverriegelnde Stange (23) umfasst, wobei ein Ende der selbstverriegelnden Stange (23) auf dem Einfülltrichter (18) gelenkig angebracht ist und das andere Ende der selbstverriegelnden Stange (23) auf der Kolbenstange des Ölzylinders gelenkig angebracht ist, und wenn das Materialtor (19) in einem geschlossenen Zustand ist, die selbstverriegelnde Stange (23) und Pleuelstange (22) in einer geraden Linie sind, wobei die Zugeinrichtung (17) für den Hubwagen vorzugsweise eine Winde (171) und ein Stahlseil (172) umfasst, wobei ein Ende des Stahlseils (172) auf dem Hubwagen (16) befestigt ist und das andere Ende des Stahlseils (172) auf eine Leistungsabgabewelle der Winde (171) gewickelt ist und wobei die Ladeeinrichtung vorzugsweise ferner eine Entstaubungshaube (24) umfasst, die an dem oberen Ende der geneigten Führungsschiene (15) bereitgestellt ist.

13. Vorrichtung nach Anspruch 12, **dadurch gekennzeichnet, dass** die Ladeeinrichtung ferner eine horizontale Führungsschiene (25) und einen horizontalen Materialliefertrichter (26) in Zusammenwirkung mit der horizontalen Führungsschiene (25) umfasst und sich ein Ende der horizontalen Führungsschiene (25) über dem unteren Ende der geneigten Führungsschiene (15) befindet, wobei die Ladeeinrichtung vorzugsweise ferner mindestens einen festen Materialtrichter (27), der entlang der horizontalen Führungsschiene (25) bereitgestellt ist, und eine Einfülleinrichtung (28), die sich über dem festen Materialtrichter (27) befindet, umfasst.

14. Vorrichtung nach Anspruch 13, **dadurch gekennzeichnet, dass** die Ladeeinrichtung zwei Sätze von geneigten Führungsschienen (15), die parallel angeordnet sind, zwei Hubwagen (16), die jeweils auf den zwei Sätzen von geneigten Führungsschienen (15) angeordnet sind, zwei Einfülltrichter (18), die jeweils auf den zwei Hubwagen (16) angeordnet sind, und eine Winde (171) zum gleichzeitigen Antreiben der zwei Hubwagen (16) umfasst und sich die zwei Einfülltrichter (18) jeweils an dem oberen Ende und dem unteren Ende der Führungsschienen befinden.

15. Vorrichtung nach Anspruch 10, **dadurch gekennzeichnet, dass** sie ferner eine PLC-Steuerung (29), einen Materialpegeldetektor (30), der zum Erfassen des Materialpegels in dem Verteilungsbehälter (1) benutzt wird, eine erste elektronische Wägemaschine (32), die an dem Boden des Kaltzuführbehälters (11) bereitgestellt ist, und eine zweite elektronische Wägemaschine (33), die an dem Boden des thermischen Zuführbehälters (3) bereitgestellt ist, umfasst, wobei die Erfassungssignalausgangsenden der ersten elektronischen Wägemaschine (32), zweiten elektronischen Wägemaschine (33) und des Materialpegeldetektors (30) mit dem Signaleingangsende der PLC-Steuerung (29) verbunden sind und das Signalausgangsende der PLC-Steuerung jeweils mit den Signaleingangsenden der ersten sich horizontal hin- und herbewegenden Schwingungseinrichtung (2), der zweiten sich horizontal hin- und herbewegenden Schwingungseinrichtung (5), der dritten sich horizontal hin- und herbewegenden Schwingungseinrichtung (13) und der Zugeinrichtung (17) für den Hubwagen verbunden ist.

## Revendications

1. Appareil d'alimentation automatique pour un four à arc électrique, comprenant un dispositif de d'alimentation thermique et un dispositif d'alimentation froid, dans lequel un dispositif de distribution automatique est prévu entre le dispositif d'alimentation froid et le dispositif d'alimentation thermique, dans lequel ledit dispositif de distribution automatique comprend un réservoir de distribution (1) et un premier dispositif à vibrations à va-et-vient horizontal (2) prévu au fond du réservoir de distribution (1), dans lequel au moins une section de distribution par paliers (101) qui est inclinée de haut en bas le long d'une direction de distribution de matériaux est prévue au fond dudit réservoir de distribution (1), **caractérisé en ce qu'**un angle entre le fond dudit réservoir de distribution (1) et un plan horizontal est de 8 à 35°, ledit dispositif d'alimentation thermique comprenant un réservoir d'alimentation thermique (3), une hotte de guidage de fumée (4) prévue au niveau de la partie supérieure du réservoir d'alimentation thermique (3), et un deuxième dispositif à vibrations à va-et-vient horizontal (5) prévu à l'arrière ou au fond du dispositif d'alimentation thermique, dans lequel le dispositif d'alimentation thermique est modularisable, et le réservoir d'alimentation thermique (3) est sous la forme d'un module avec différentes structures.

2. Appareil selon la revendication 1, **caractérisé en ce que** le nombre de paliers de ladite section de distribution par paliers (101) est de 2 à 30, et les paliers individuels sont reliés solidement.

3. Appareil selon la revendication 1, **caractérisé en ce que** le fond dudit réservoir d'alimentation thermique (3) présente des paliers, et les paliers adjacents sont reliés hermétiquement.

4. Appareil selon la revendication 1, **caractérisé en ce que** le fond dudit réservoir d'alimentation thermique (3) présente une structure de fond plate inclinée.

5. Appareil selon la revendication 1, **caractérisé en ce que** ledit réservoir d'alimentation thermique (3) est un réservoir de transport à double conduit, qui est agencé selon une forme inclinée élevée à une extrémité d'alimentation et basse à une extrémité de décharge, la partie intermédiaire dudit réservoir de transport à double conduit est pourvue d'une plaque de support de matériaux (301) présentant des canaux de fumée ; un conduit d'écoulement de matériaux (302) est au-dessus de la plaque de support de matériaux (301), et un conduit d'écoulement de fumée (303) est en dessous de la plaque de support de matériaux (301) ; et la partie supérieure du conduit d'écoulement de matériaux (302) est ouverte, ladite hotte de guidage de fumée (4) est pourvue d'un orifice d'aspiration de fumée auxiliaire (401) proche d'une partie d'extrémité supérieure du conduit d'écoulement de matériaux (302), et l'extrémité supérieure dudit conduit d'écoulement de fumée (303) est pourvue d'un orifice d'aspiration de fumée principal (6), dans lequel l'extrémité inférieure dudit conduit d'écoulement de fumée (303) est de préférence plus longue que l'extrémité inférieure du conduit d'écoulement de matériaux (302), et la partie la plus longue forme une section d'entrée dans le four (304) reliée au four à arc électrique, dans lequel ladite plaque de support de matériaux (301) est de préférence composée de plaques unitaires agencées par paliers le long de la direction longitudinale du réservoir de transport à double conduit, lesdits canaux de fumée sont les espaces entre les plaques unitaires adjacentes, et les projections orthographiques des extrémités des plaques unitaires adjacentes sur le plan horizontal sont superposées ou en butée, et dans lequel lesdites plaques unitaires sont de préférence agencées pour être horizontales ou agencées pour être inclinées le long de la direction de progression des matériaux, et lesdites plaques unitaires sont des plaques plates ou des plaques en forme d'arc.

6. Appareil selon la revendication 5, **caractérisé en ce que** des brûleurs (7) sont prévus sur les ouvertures supérieures dudit conduit d'écoulement de matériaux (302).

7. Appareil selon la revendication 6, **caractérisé en ce qu'**il comprend en outre un dispositif de réglage de plaque réversible pour sceller la ligne de soudure au niveau de la partie de liaison entre le dispositif d'alimentation thermique et le four à arc électrique, dans lequel ladite hotte de guidage de fumée (4) est de préférence pourvue d'au moins une structure abrupte en section transversale (10) pour perturber le régime d'écoulement de fumée.

8. Appareil selon la revendication 1, **caractérisé en ce que** ledit dispositif d'alimentation froid comprend un réservoir d'alimentation froid (11), un couvercle de réservoir (12) prévu sur un orifice de chargement du réservoir d'alimentation froid (11), et un troisième dispositif à vibrations à va-et-vient horizontal (13) au fond ou à l'arrière du réservoir d'alimentation froid (11).

9. Appareil selon la revendication 1, **caractérisé en ce que** ledit dispositif d'alimentation froid, le dispositif de distribution automatique et le dispositif d'alimentation thermique sont agencés en une ligne droite en série ou agencés en une forme en L en série, dans lequel la partie de liaison entre ledit réservoir d'alimentation thermique (3) et le réservoir de distribution (1) est de préférence pourvue d'une porte d'étanchéité (14) ayant une fonction d'étanchéité à la fumée.

10. Appareil selon l'une quelconque des revendications précédentes, **caractérisé en ce qu'**il comprend en outre un dispositif de chargement pour les matériaux d'alimentation vers le dispositif d'alimentation froid, ledit dispositif de chargement comprend un rail de guidage incliné (15), un chariot élévateur (16) en coopération avec le rail de guidage incliné (15), un dispositif de traction (17) pour le chariot élévateur et une trémie de chargement (18) prévue sur le chariot élévateur (16), une porte à matériaux (19) est prévue sur l'orifice de chute des matériaux de ladite trémie de chargement (18), et un mécanisme d'ouverture et de fermeture qui contrôle l'ouverture et la fermeture de la porte à matériaux est également prévu sur ladite trémie de chargement (18).

11. Appareil selon la revendication 10, **caractérisé en ce que** l'orifice de chute de matériaux de ladite trémie de chargement (18) fait face à la face côté inférieur du rail de guidage incliné (15), et la trémie de chargement (18) a également une plaque de guidage de matériaux inclinée (181) pour guider les matériaux vers l'orifice de chute de matériaux, dans lequel un dispositif à vibrations (20) est de préférence prévu au fond de ladite plaque de guidage de matériaux inclinée (181), et dans lequel ladite porte à matériaux (19) est de préférence articulée sur la partie de bord de l'orifice de chute de matériaux, ledit mécanisme d'ouverture et de fermeture comprend un vérin à huile (21) articulé sur la trémie de chargement (18) et une tige de liaison (22) reliant la tige de piston du vérin à huile et la porte à matériaux (19), et ladite tige de liaison (22) est reliée de manière articulée à la tige de piston du vérin à huile et de la porte à matériaux (19), respectivement.

12. Appareil selon la revendication 11, **caractérisé en ce que** ledit mécanisme d'ouverture et de fermeture comprend en outre une tige d'autoverrouillage (23), une extrémité de ladite tige d'autoverrouillage (23) est articulée sur la trémie de chargement (18), et l'autre extrémité de la tige d'autoverrouillage (23) est articulée sur la tige de piston du vérin à huile ; et lorsque la porte à matériaux (19) est dans un état fermé, ladite tige d'autoverrouillage (23) et la tige de liaison (22) sont en ligne droite, dans lequel ledit dispositif de traction (17) pour le chariot élévateur comprend de préférence un treuil (171) et un câble en acier (172), une extrémité dudit câble en acier (172) est fixée sur le chariot élévateur (16), et l'autre extrémité du câble en acier (172) est enroulée sur un arbre de sortie de puissance du treuil (171), et dans lequel ledit dispositif de chargement comprend en outre de préférence une hotte dépoussiérante (24) prévue à l'extrémité supérieure du rail de guidage incliné (15).

13. Appareil selon la revendication 12, **caractérisé en ce que** ledit dispositif de chargement comprend en outre un rail de guidage horizontal (25) et une trémie de distribution de matériaux horizontale (26) en coopération avec le rail de guidage horizontal (25), et une extrémité du rail de guidage horizontal (25) se trouve au-dessus de l'extrémité inférieure du rail de guidage incliné (15), dans lequel ledit dispositif de chargement comprend en outre de préférence au moins une trémie de matériaux fixe (27) prévue le long du rail de guidage horizontal (25) et un dispositif de charge (28) situé au-dessus de la trémie de matériaux fixe (27).

14. Appareil selon la revendication 13, **caractérisé en ce que** ledit dispositif de chargement comprend deux ensembles de rails de guidage inclinés (15) agencés en parallèle, deux chariots élévateurs (16) agencés respectivement sur les deux ensembles de rails de guidage inclinés (15), deux trémies de chargement (18) agencées respectivement sur les deux chariots élévateurs (16), et un treuil (171) pour entraîner simultanément les deux chariots élévateurs (16), et lesdites deux trémies de chargement (18) sont respectivement situées à l'extrémité supérieure et l'extrémité inférieure des rails de guidage.

15. Appareil selon la revendication 10, **caractérisé en ce qu'**il comprend en outre une unité de commande PLC (29), un détecteur de niveau de matériaux (30) utilisé pour détecter le niveau de matériaux dans le réservoir de distribution (1), une première machine de pesage électronique (32) prévue au fond du réservoir d'alimentation froid (11), et une seconde machine de pesage électronique (33) prévue au fond du réservoir d'alimentation thermique (3), les extrémités de sortie de signaux de détection de ladite première machine de pesage électronique (32), de ladite seconde machine de pesage électronique (33) et dudit détecteur de niveau de matériaux (30) sont connectées à l'extrémité d'entrée de signaux de l'unité de commande PLC (29), et l'extrémité de sortie de signaux de ladite unité de commande PLC (29) est connectée aux extrémités d'entrée de signaux du premier dispositif à vibrations à va-et-vient horizontal (2), du deuxième dispositif à vibrations à va-et-vient horizontal (5), du troisième dispositif à vibrations à va-et-vient horizontal (13) et du dispositif de traction (17) pour le chariot élévateur, respectivement.
